# FASCICULE DE BREVET EUROPEEN

(11) **EP 2 956 632 B1**
(45) Date de publication et mention de la délivrance du brevet: **05.04.2017**
(21) Numéro de dépôt: 14710013.5
(22) Date de dépôt: 14.02.2014
(51) Int. Cl.: F02C 7/22, F01D 17/08, F02C 7/264, F01D 19/00

(54) **PROCEDE DE SURVEILLANCE D'UN DEGRE DE COLMATAGE D'INJECTEURS DE DEMARRAGE D'UNE TURBOMACHINE**
VERFAHREN ZUR ÜBERWACHUNG EINES VERSTOPFUNGSGRADES DER STARTINJEKTOREN EINES TURBINENMOTORS
METHOD FOR MONITORING A DEGREE OF CLOGGING OF THE STARTING INJECTORS OF A TURBINE ENGINE

(30) Priorité: 18.02.2013 FR 1351359
(43) Date de publication de la demande: 23.12.2015
(73) Titulaire: Safran Helicopter Engines, 64510 Bordes (FR)
(72) Inventeur: DEBBOUZ, Nadir Christian, F-40300 Port De Lanne (FR); DE BARBEYRAC, Philippe Patrick Marc, F-64600 Anglet (FR); ENGUEHARD, Florian, Arnaud, Jonathan, F-40090 Saint-perdon (FR); FAUPIN, Francois Xavier Marie, F-64200 Biarritz (FR); LAMAZERE, Fabien, F-64500 Ciboure (FR)
(74) Mandataire: Regimbeau
(86) Numéro de dépôt international: PCT/FR2014/050309
(87) Numéro de publication internationale: WO 2014/125229

(56) Documents cités:
- WO-A1-90/05877
- FR-A1- 2 942 001
- US-A- 3 365 881
- US-A1- 2012 006 032
- US-B2- 7 281 382

## Description

### DOMAINE DE L'INVENTION

Le domaine de l'invention est celui de la surveillance du degré de colmatage d'injecteurs de démarrage dans une turbomachine, et des turbomachines équipées de systèmes permettant une telle surveillance.

### ETAT DE LA TECHNIQUE

Une turbomachine comprend classiquement une turbine, qui est actionnée en rotation par des gaz d'échappement résultant de la combustion, dans une chambre de combustion, d'un mélange composé d'air et de carburant.

A cet égard, une turbomachine comporte plusieurs types d'injecteurs de carburant dans la chambre de combustion, parmi lesquels les injecteurs de démarrage, qui permettent d'initier la combustion en allumant un mélange air/carburant, et les injecteurs principaux, qui maintiennent la combustion une fois celle-ci initiée, et présentent un débit plus important que celui des injecteurs de démarrage. Les injecteurs principaux peuvent être remplacés par une roue d'injection remplissant la même fonction, et qui pulvérise le carburant dans la chambre de combustion par centrifugation.

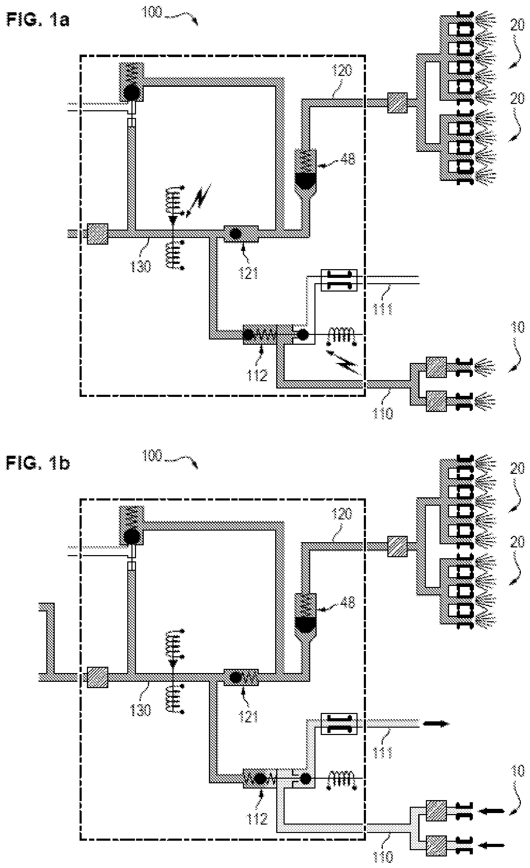

En référence aux figures 1a et 1b, on a représenté un circuit classique d'alimentation en carburant des injecteurs d'une turbomachine.

Ce circuit 100 comprend un conduit de distribution 130 de carburant vers un conduit d'alimentation 110 des injecteurs de démarrage 10, et un conduit d'alimentation 120 des injecteurs principaux ou de la roue d'injection centrifuge 20.

Le conduit d'alimentation 120 de la roue d'injection comporte un clapet de niveau 121, qui s'ouvre lorsque le débit de carburant dans le circuit excède un seuil préétabli. Ainsi, au cours d'une phase de démarrage de la turbomachine, le débit de carburant dans le circuit est faible, et seuls les injecteurs de démarrage sont alimentés. Puis, lorsque la combustion a été initiée, le débit de carburant peut augmenter pour que les injecteurs principaux ou la roue d'injection soient également alimentés (situation représentée en figure 1a).

En outre, le circuit 100 comporte un circuit de purge 111 vers l'atmosphère des injecteurs de démarrage relié au conduit 110 d'alimentation desdits injecteurs. Ces conduits peuvent être isolés du conduit de distribution au moyen d'un électro-clapet 112, commandé électriquement.

En particulier le clapet 112 peut être commandé pour s'ouvrir, afin d'autoriser l'écoulement de carburant vers les injecteurs, ou pour se fermer, afin de permettre la purge des injecteurs de démarrage.

Une fois la combustion initiée, les deux types d'injecteurs sont alimentés en carburant, jusqu'à ce que l'électro-clapet 112 soit actionné pour couper l'alimentation des injecteurs de démarrage. Le carburant est alors pulvérisé dans la chambre de combustion par la seule roue d'injection ou par les injecteurs principaux, et les injecteurs de démarrage sont ventilés par de l'air pressurisé de la chambre de combustion afin d'éviter qu'il ne s'y forme de la coke et que les injecteurs ne se colmatent.

Néanmoins, il apparaît que malgré les purges des injecteurs de démarrage, de la coke parvient à se former et il en résulte un colmatage progressif des injecteurs de démarrage.

A l'heure actuelle, aucune solution technique ne permet de supprimer ou de retarder ce phénomène de colmatage. Les injecteurs de démarrage sont donc progressivement colmatés jusqu'à atteindre un degré de colmatage tel qu'il est difficile, voire impossible, de démarrer la turbomachine.

Dans le cas de difficultés de démarrage, les opérateurs réalisent des opérations de recherches de pannes décrites dans un manuel de maintenance de la turbomachine. Ces recherches sont généralement longues et peu efficaces, puisqu'il faut passer un temps parfois important avant de détecter la cause des difficultés de démarrage, en l'espèce le colmatage des injecteurs (en effet, de nombreuses autres causes sont envisageables).

De plus, ces opérations de recherche impliquent une indisponibilité imprévue de la turbomachine, et donc de l'aéronef dans lequel elle est installée, qui peuvent en outre nécessiter d'annuler une ou plusieurs missions de vol prévues. Ces opérations représentent donc un coût important.

Pour éviter de recourir à cette méthode, il est également connu de remplacer occasionnellement et de façon préventive les injecteurs de démarrage. Ceci implique des coûts parfois inutiles, liés au remplacement des injecteurs. En outre cette solution se heurte à des difficultés d'approvisionnement des pièces.Le document US 7 281 382 B2 décrit un procédé de surveillance.

Il existe donc un besoin pour pouvoir détecter le colmatage des injecteurs de démarrage, de préférence avant d'avoir atteint un degré tel que des difficultés ou une impossibilité sont rencontrées pour démarrer une turbomachine.

### PRESENTATION DE L'INVENTION

L'invention a pour but de pallier le problème présenté ci-avant, en proposant un procédé de surveillance d'un degré de colmatage des injecteurs de démarrage.

Un autre but de l'invention est de pouvoir prévoir et anticiper le moment où le degré de colmatage des injecteurs de démarrage atteint un niveau tel qu'il est impossible de démarrer la turbomachine.

A cet égard, l'invention a pour objet un procédé de surveillance d'un degré de colmatage des injecteurs de démarrage d'une turbomachine comprenant :
- une chambre de combustion, dans laquelle débouche au moins un injecteur de démarrage alimenté en carburant, lesdits injecteurs de démarrage étant adaptés pour initier la combustion dans ladite chambre par allumage du carburant, et
- une turbine, actionnée en rotation par les gaz résultant de la combustion du carburant dans la chambre,
le procédé étant caractérisé en ce qu'il comprend les étapes consistant à :
- mesurer, au cours d'une phase de démarrage de la turbomachine, la température des gaz d'échappement en sortie de la turbine et,
- déterminer, à partir de l'évolution temporelle de la température ainsi mesurée, un degré de colmatage des injecteurs de démarrage.

Avantageusement, mais facultativement, le procédé selon l'invention peut en outre comprendre au moins l'une des caractéristiques suivantes :
- l'étape de détermination du degré de colmatage des injecteurs de démarrage en fonction de l'évolution temporelle de la température des gaz d'échappement en sortie de turbine comprend :
   o la détection d'une phase de chute de la température au cours d'une phase d'augmentation de ladite température,
   l'absence de détection de ladite chute correspondant à une absence de colmatage des injecteurs de démarrage, et
   o la mesure de l'amplitude de ladite chute.
- la variation de l'amplitude de la chute de la température des gaz en sortie de turbine au cours de démarrages successifs est comparée à au moins un seuil prédéterminé, et le degré de colmatage des injecteurs de démarrage est déduit du résultat de ladite comparaison.
- Le procédé comprend en outre, au cours de l'étape de mesure de la température des gaz d'échappement en sortie de la turbine, la mesure de la vitesse de rotation de la turbine, et la déduction du degré de colmatage des injecteurs de démarrage est réalisée à partir de l'évolution temporelle de la température des gaz et des mesures de vitesse de rotation de la turbine.
- l'étape de détermination du degré de colmatage des injecteurs de démarrage comprend :
   o la mesure de la valeur de la vitesse de rotation de la turbine au moment du point d'inflexion de la température des gaz en sortie de turbine amorçant la chute de ladite température,
   o la comparaison de la variation de ladite valeur au cours de démarrages successifs à un seuil prédéterminé, et
   o la déduction, à partir des comparaisons des variations de l'amplitude de la chute de température et de la valeur de vitesse de la turbine avec leurs seuils respectifs, du degré de colmatage des injecteurs de démarrage.
- Le procédé comprend en outre la déduction, à partir du degré de colmatage des injecteurs de démarrage, d'un nombre de démarrages de la turbomachine restant avant que le degré de colmatage des injecteurs de démarrage n'atteigne un niveau résultant en une impossibilité de démarrer ladite turbomachine.
- Le procédé comprend l'activation d'une alerte pour qu'une maintenance ou un remplacement des injecteurs de démarrage soit réalisé avant que le degré de colmatage des injecteurs de démarrage n'atteigne un niveau résultant en une impossibilité de démarrer ladite turbomachine.

L'invention a également pour objet un système de surveillance d'un état de fonctionnement des injecteurs de démarrage d'une turbomachine comprenant :
- une chambre de combustion, dans laquelle débouche au moins un injecteur de démarrage alimenté en carburant, lesdits injecteurs de démarrage étant adaptés pour initier la combustion dans ladite chambre par allumage du carburant, et
- une turbine, actionnée en rotation par les gaz résultant de la combustion du carburant dans la chambre,
le système de surveillance étant adapté pour la mise en oeuvre du procédé de surveillance décrit précédemment, et comprenant :
- au moins un capteur de température des gaz en sortie de la turbine (5), et
- une unité de traitement, comportant une mémoire et des moyens de traitement adaptés pour traiter les mesures de température pour déterminer un degré de colmatage des injecteurs de démarrage.

Avantageusement, mais facultativement, le système selon l'invention comprend en outre au moins l'une des caractéristiques suivantes :
- le système comprend en outre au moins un capteur de vitesse de rotation de la turbine, et les moyens de traitement de l'unité de traitement sont en outre adaptés pour traiter les mesures de vitesse de rotation de la turbine, pour déterminer le degré de colmatage des injecteurs de démarrage.
- les capteurs sont adaptés pour effectuer des mesures à une fréquence supérieure ou égale à 1 Hz.

L'invention a encore pour objet une turbomachine comprenant :
- une chambre de combustion, dans laquelle débouche au moins un injecteur de démarrage alimenté en carburant, lesdits injecteurs de démarrage étant adaptés pour initier la combustion dans ladite chambre par allumage du carburant, et
- une turbine, actionnée en rotation par les gaz résultant de la combustion du carburant dans la chambre,
la turbomachine comprenant en outre un système de surveillance proposé par l'invention.

L'invention a enfin pour objet un aéronef, comprenant au moins une turbomachine comportant:
- une chambre de combustion, dans laquelle débouche au moins un injecteur de démarrage alimenté en carburant, lesdits injecteurs de démarrage étant adaptés pour initier la combustion dans ladite chambre par allumage du carburant, et
- une turbine, actionnée en rotation par les gaz résultant de la combustion du carburant dans la chambre,
l'aéronef étant comprenant en outre un système de surveillance proposé par l'invention.

Le procédé de surveillance ainsi proposé permet d'évaluer un degré de colmatage des injecteurs de démarrage, et d'en déduire ainsi s'il est nécessaire ou non de procéder à une maintenance, et même de planifier cette maintenance en assurant que le démarrage de la turbomachine soit possible jusqu'à ladite maintenance.

Le circuit logistique d'approvisionnement des pièces pour le remplacement des injecteurs est également mieux organisé.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1a et 1b, déjà décrites, représentent schématiquement un circuit d'alimentation en carburant des injecteurs d'une turbomachine.
- La figure 2 représente un turbomoteur muni d'un système de surveillance d'un degré de colmatage des injecteurs de démarrage,
- La figure 3 représente les principales étapes du procédé de surveillance d'un degré de colmatage des injecteurs de démarrage.
- La figure 4a représente l'évolution temporelle de la température des gaz d'échappement en sortie de turbine au cours d'une phase de démarrage d'une turbomachine et de la vitesse de rotation de la turbine pour une turbomachine saine,
- La figure 4b représente les mêmes évolutions que la figure 4a pour une turbomachine dont les injecteurs sont pré-colmatés,
- La figure 5 représente une variante de mise en oeuvre du procédé de la figure 3.

### DESCRIPTION DETAILLEE D'AU MOINS UN MODE DE MISE EN OEUVRE DE L'INVENTION

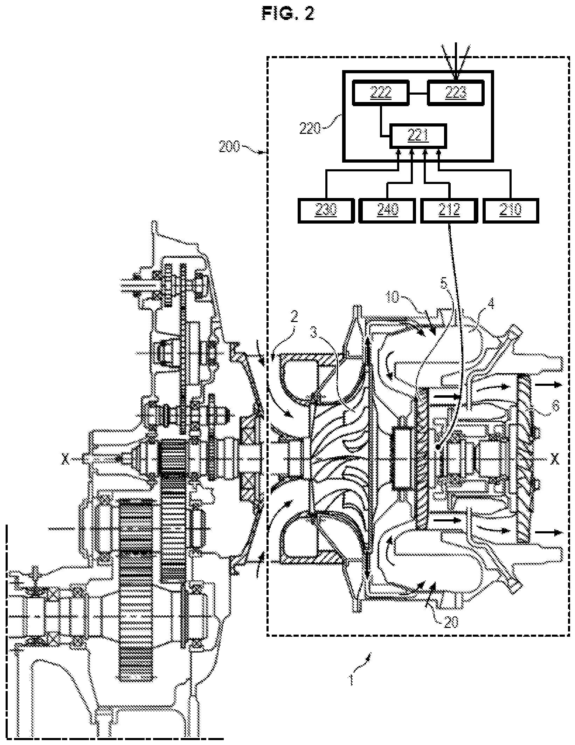

En référence à la figure 2, on a représenté une turbomachine 1 du type turbomoteur comprenant successivement, de l'amont vers l'aval par rapport à un flux d'air s'écoulant dans ledit turbomoteur, une voie d'admission d'air 2, un compresseur 3, une chambre de combustion 4, une turbine 5, et une tuyère d'échappement des gaz 6.

De façon connue en soi, de l'air pénètre dans la turbomachine par la voie d'admission d'air 2 et est comprimé par le compresseur 3.

Une pluralité d'injecteurs de démarrage 10 et d'injecteurs principaux 20 (symbolisés par des flèches sur la figure 2) pénètrent dans la chambre de combustion 4 pour enflammer du carburant, la combustion étant permise par l'apport d'air de l'ensemble de compression 3.

L'injection de carburant a lieu dans la chambre de combustion 4, d'abord au moyen d'injecteurs de démarrage 10 pour initier la combustion de l'air aspiré et du carburant, puis au moyen d'une roue d'injection ou d'injecteurs principaux, conformes à ceux illustrés en figures 1a et 1 b.

La combustion entraine la turbine en rotation autour d'un axe de la turbomachine X-X représenté en pointillé sur la figure, qui elle-même entraine une hélice excentrée par rapport audit axe. Les gaz résultant de la combustion sont évacués par la tuyère 6.

En outre, comme illustré schématiquement sur la figure, la turbomachine 1 comprend un système de surveillance 200 d'un degré de colmatage des injecteurs de démarrage.

Ce système comprend un premier capteur de température 210, qui peut être positionné en aval de la turbine 5 du générateur de gaz, pour mesurer la température des gaz d'échappement en sortie de la turbine.

Le système peut en outre comprendre au moins un second capteur 212, adapté pour mesurer la vitesse de rotation de l'arbre de la turbine. Ce capteur est par exemple du type électro magnétique, positionné en face d'une roue phonique dont la vitesse de rotation est proportionnelle à la vitesse de rotation de l'arbre de la turbine.

Le système comprend également une unité de traitement 220 configurée pour commander le capteur de température 210, pour acquérir à une fréquence déterminée la température des gaz d'échappement. Cette fréquence est avantageusement supérieure ou égale à 1 Hz.

A cet égard l'unité de traitement 220 comporte des moyens de communication 221, qui peuvent être filaires ou à distance, avec les capteurs, ainsi que des moyens de traitement 222 des données acquises et une mémoire 223, les moyens de traitement et la mémoire permettant d'établir une évolution temporelle des données mesurées, et de calculer des indicateurs d'un degré de colmatage des injecteurs de démarrage tels que décrits ci-après.

Les moyens de traitement comprennent avantageusement un processeur sur lequel est installé un programme configuré pour le traitement des données acquises.

Les moyens de traitement 222 sont avantageusement configurés pour permettre une normalisation des mesures effectuées, c'est-à-dire pour enlever des mesures certaines variations pouvant résulter du contexte de l'acquisition, par exemples des variations d'ordre météorologiques.

Ainsi le système de surveillance peut en outre comprendre des capteurs supplémentaires 230 parmi lesquels :
- un capteur de la pression atmosphérique ambiante,
- un capteur de la température ambiante,
- un capteur de pression de l'air en sortie de l'ensemble de compression, etc.

Le système de surveillance peut en outre comprendre des moyens de mesure 240 de la tension aux bornes d'un démarreur de la turbomachine et du courant consommé par ledit démarreur au cours d'un démarrage de la turbomachine, ces grandeurs pouvant être également prise en compte lors de la détermination d'un degré de colmatage des injecteurs de démarrage.

Enfin le système de surveillance peut comprendre des moyens de communication 250 avec un système embarqué dans l'aéronef ou avec une base distante, pour communiquer les mesures acquises, le degré de colmatage des injecteurs de démarrage déduit desdites mesures, et pour le cas échéant générer une alerte de maintenance de la turbomachine, si le degré de colmatage des injecteurs de démarrage a atteint ou est proche d'atteindre un niveau résultant en une impossibilité de démarrer la turbomachine.

Avantageusement, dans le cas d'un aéronef comportant plusieurs turbomachines, le système de surveillance est commun auxdites turbomachines. Les capteurs propres au fonctionnement de chaque turbomachine (par exemple capteurs de température des gaz ou de vitesse de rotation) sont alors multipliés pour équiper chaque turbomachine.

En outre le système 200 peut alors comprendre des moyens de détection de l'ordre de démarrage des turbomachines.

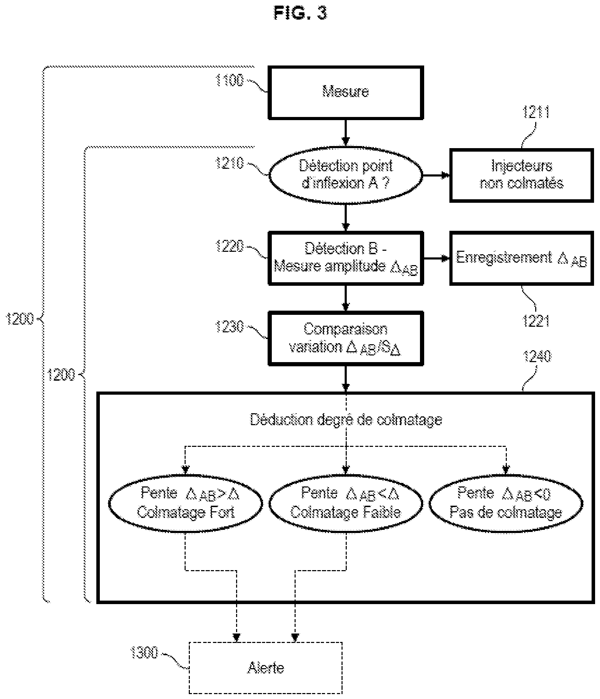

On va maintenant décrire, en référence à la figure 3, un procédé 1000 de surveillance d'un degré de colmatage d'injecteurs de démarrage mis en oeuvre par le système 200 décrit ci-avant.

Le procédé est décrit pour une turbomachine, mais est applicable au cas où le système 200 réalise la surveillance de plusieurs turbomachines d'un même aéronef.

Ce procédé comporte une première étape de mesure 1100, au cours d'une phase de démarrage de la turbomachine, et à une fréquence déterminée, de la température T des gaz d'échappement en sortie de turbine afin d'obtenir l'évolution temporelle, lors de ladite phase, de la température.

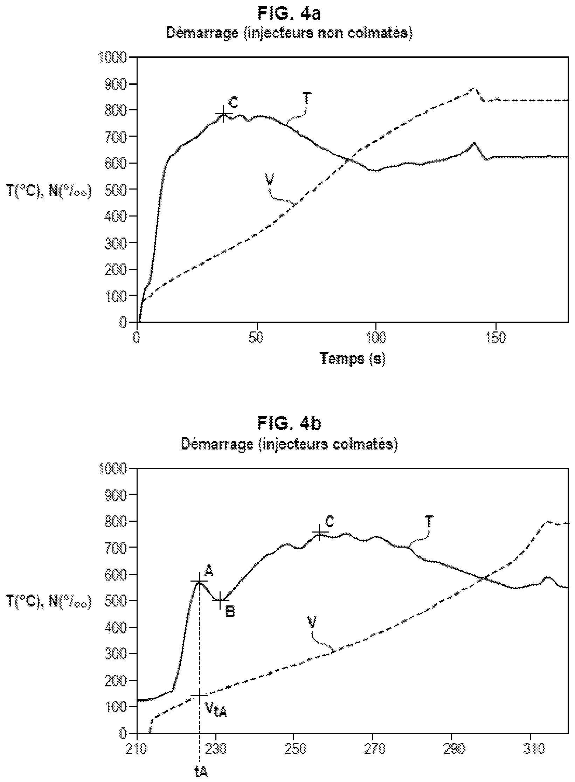

On a représenté en figure 4a un exemple d'une telle évolution temporelle, illustrée par la courbe en gras, pour un turbomachine « saine », c'est-à-dire, dans laquelle les injecteurs de démarrage ne sont pas colmatés, et en figure 4b la même évolution temporelle (également illustrée par la courbe en gras) lorsque les injecteurs de démarrage sont « pré-colmatés », c'est-à-dire présentent un degré de colmatage intermédiaire entre une absence totale de colmatage, et un degré de colmatage tel qu'il est impossible de démarrer la turbomachine.

On remarque dans la figure 4a que, dans une turbomachine saine, la température des gaz d'échappement présente une première phase d'augmentation rapide, jusqu'à atteindre un pallier, puis la température décroît progressivement jusqu'à atteindre un second pallier, inférieur au premier.

La première phase d'augmentation correspond à la phase de démarrage de la turbomachine.

Dans la figure 4b, la phase d'augmentation rapide de la température des gaz d'échappement est interrompue par une brusque chute, repérée sur la figure entre deux points d'inflexion A, à partir duquel la température diminue, et B à partir duquel l'élévation de la température reprend.

Ces points d'inflexion A et B n'apparaissent pratiquement jamais lorsque les injecteurs de démarrage ne sont pas colmatés du tout (par exemple lorsqu'ils sont neufs). Ils peuvent néanmoins apparaitre dans certaines conditions atmosphériques. Pour cette raison la simple existence d'une chute de température ne constitue pas un indicateur fiable d'un degré de colmatage des injecteurs de démarrage.

En revanche, dans le cas où la courbe présente cette chute, il a été découvert que, plus les injecteurs de démarrage présentent un degré de colmatage important, et plus la chute de température entre la température au point d'inflexion A et celle au point B est brusque et importante.

On en déduit donc que l'augmentation progressive, au fur et à mesure des démarrages, de l'amplitude d'une chute de température des gaz d'échappement en sortie de turbine au cours d'une phase de démarrage de la turbomachine est un indicateur du colmatage des injecteurs.

Par conséquent, après l'étape de mesure 1100, le procédé comprend une étape 1200 de détermination, à partir des mesures acquises, d'un degré de colmatage des injecteurs de démarrage.

Ce procédé est présenté sur la figure 3 sous forme d'algorithme de décision mis en oeuvre par les moyens de traitement 222 de l'unité de traitement 220 et se déroule comme indiqué ci-après.

Au cours d'une première sous-étape 1210, on détecte, au cours d'une phase d'augmentation générale de la température des gaz pendant la phase de démarrage de la turbomachine, pouvant être identifiée au moyen d'une fenêtre temporelle déterminée, une chute de ladite température.

La fenêtre temporelle est ajustée pour garantir que la chute de la température des gaz détectée corresponde à la chute décrite ci-avant, qui commence au niveau du point d'inflexion A. En effet, après cette première chute de température, la température croît de nouveau puis présente une autre phase de diminution (à partir du point C), qui elle, correspond à la fin du cycle de démarrage et apparaît classiquement quel que soit le degré de colmatage des injecteurs de démarrage (y compris lorsque les injecteurs ne sont pas colmatés, comme en figure 4a). La fenêtre temporelle est donc ciblée sur la phase d'augmentation générale de la température précédant ce point C. Elle est déterminée par l'Homme du Métier en fonction des caractéristiques de la turbomachine.

Si le point d'inflexion A n'est pas détecté, alors on en déduit au cours d'une sous-étape 1211 que les injecteurs de démarrage ne sont pas colmatés.

Si le point d'inflexion A est détecté, le procédé comprend en outre la détection 1220 du second point d'inflexion B, à partir duquel la température croît de nouveau, pour pouvoir identifier la fin de la phase de chute, et la mesure de l'amplitude de la chute de température entre les points A et B, c'est-à-dire la valeur absolue de la différence de température entre les points A et B.

Les étapes qui précèdent sont effectuées de préférence à chaque démarrage de la turbomachine, et l'amplitude de la chute de température entre les points A et B est enregistrée au cours d'une étape 1221 avec la date de la mesure, afin de pouvoir établir l'évolution temporelle de la chute de température.

Puis, également à chaque démarrage, à l'issue de l'étape de mesure, la variation de l'amplitude de la chute de température entre A et B par rapport au(x) démarrage(s) précédent(s) est comparée au cours d'une sous-étape 1230 à au moins un seuil S_{Δ} prédéterminé.

Précisément, en notant Δ_{AB} l'amplitude de la chute de température des gaz d'échappement entre les points A et B, on peut calculer la variation Δ_{AB}(j)-Δ_{AB}(j-1) de Δ_{AB} entre Δ_{AB}(j) au jour j de la mesure, et Δ_{AB}(j-1) à la veille de la mesure, pour obtenir une variation en degrés par jours.

Alternativement, si la turbomachine est démarrée plusieurs fois par jour, on peut calculer la variation de l'amplitude de la chute de température des gaz d'un démarrage à l'autre, en calculant Δ_{AB}(d)-Δ_{AB}(d-1) entre Δ_{AB}(d) au démarrage d au cours duquel la mesure est faite et Δ_{AB}(d-1) au démarrage précédent.

Le seuil S_{Δ} dépend du type de variation calculé (par jour ou par démarrage), et du degré de colmatage que l'on veut pouvoir détecter à partir de la comparaison. Par exemple, le seuil S_{Δ} peut être de 30°C/jour. On remarque que le seuil est positif car l'amplitude de la chute de température augmente avec le degré de colmatage des injecteurs de démarrage.

Si la variation de l'amplitude de la chute de température des gaz calculée est négative on en déduit que les injecteurs de démarrage ne sont pas colmatés, ou qu'il existe une erreur de mesure.

Si la variation est positive, on la compare avec le seuil S_{Δ}.

En fonction du résultat de chaque comparaison les moyens de traitement déduisent au cours d'une étape 1240 un degré de colmatage des injecteurs de démarrage.

Ce degré de colmatage peut être plus ou moins précis en fonction du nombre de seuils utilisés pour étudier la différence de température entre A et B.

Par exemple, si un seul seuil S_{Δ} est utilisé, on peut seulement distinguer entre deux degrés de colmatage : si la variation de l'amplitude de la chute de température entre A et B est comprise entre 0 et le seuil, on peut attribuer un degré « faible » de colmatage aux injecteurs, et si la variation de l'amplitude de la chute est supérieure audit seuil S_{Δ}, on peut attribuer un degré « fort » de colmatage aux injecteurs.

Bien entendu, plus le nombre de seuils est élevé, et plus on peut quantifier avec précision un degré de colmatage des injecteurs de démarrage.

Ce degré de colmatage est avantageusement traduit en durée ou en nombre de démarrage restants avant d'atteindre un niveau de colmatage résultant en une impossibilité de démarrer la turbomachine.

Dans l'exemple qui précède, le degré « faible » de colmatage peut correspondre à un risque de non-démarrage à moyen terme, par exemple après 20 démarrages supplémentaires ou après deux semaines d'utilisation.

Le degré « fort » de colmatage correspond quant à lui à un risque de non-démarrage à court terme, c'est-à-dire après 6 démarrages supplémentaires ou trois jours supplémentaires d'utilisation.

Avantageusement, le procédé peut comprendre la génération d'une alerte 1300, en fonction du degré de colmatage détecté, ou du nombre de jours ou de démarrages restants avant que ce degré de colmatage n'atteigne l'impossibilité de démarrer la turbomachine.

En reprenant l'exemple qui précède, en cas de degré de colmatage « fort » correspondant à un à risque de non-démarrage à court-terme, une alerte peut être déclenchée, indiquant la nécessité de remplacer les injecteurs de démarrage dès que possible.

Un autre type d'alerte peut être prévu, par exemple en cas de degré de colmatage « faible », indiquant la nécessité de remplacer les injecteurs de démarrage lors que la prochaine opération de maintenance planifiée.

Une alerte peut également déclencher la planification d'une maintenance.

L'alerte peut être donnée par les moyens de communication 250 avec un système embarqué dans l'aéronef ou avec une base distante, afin qu'un opérateur puisse la détecter.

Dans le cas où aucun colmatage des injecteurs de démarrage n'a été détecté, les moyens de communication peuvent également relayer cette information à titre de mesure de routine ou pour effectuer un suivi dans le temps des injecteurs.

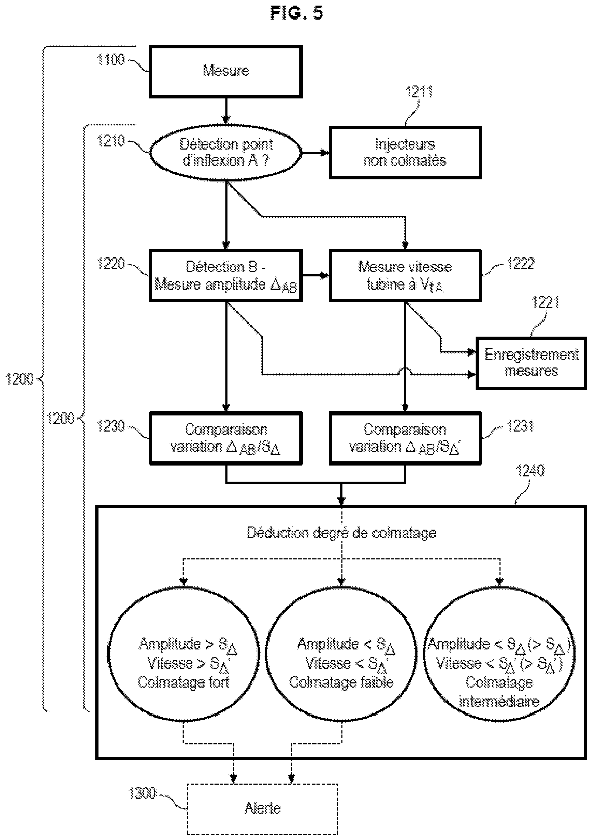

On va maintenant décrire une variante de mise en oeuvre du procédé, représentée en figure 5.

Dans cette variante, le système de surveillance comprend, outre le capteur 210 de mesure de température des gaz d'échappement en sortie de turbine, un capteur 212 de la vitesse de rotation de l'arbre de la turbine.

Le procédé 1000 comprend toujours une étape de mesure 1100, au cours d'une phase de démarrage de la turbomachine, et à une fréquence déterminée, de la température des gaz d'échappement en sortie de turbine afin d'obtenir l'évolution temporelle, lors de ladite phase, de la température.

De plus, cette étape 1100 comprend en outre la mesure, au cours de la phase de démarrage de la turbomachine, et à une fréquence déterminée, avantageusement la même que pour la mesure de température, de la vitesse de rotation de la turbine, pour obtenir l'évolution temporelle de ladite vitesse.

Cette évolution temporelle est la seconde courbe des figures 4a et 4b, en trait plein, non gras.

Les inventeurs ont constaté que plus les injecteurs sont colmatés, plus le point d'inflexion A est détecté pour une vitesse de rotation de la turbine faible.

Un autre indicateur du colmatage des injecteurs de démarrage est donc la mesure de l'évolution, au fur et à mesure des démarrages, de la valeur de la vitesse V de rotation de la turbine au moment t_{A} où apparaît le point d'inflexion A amorçant la chute de la température des gaz d'échappement, la vitesse étant notée V_{tA}.

L'estimation 1200 du degré de colmatage des injecteurs de démarrage est alors réalisé en confrontant les deux indicateurs.

Plus particulièrement, le procédé, mis en oeuvre par les moyens de traitement 222 de l'unité de traitement 220, se déroule comme suit.

Au cours d'une sous-étape 1210 on détecte comme précédemment au cours d'une phase d'augmentation de la température des gaz en sortie de turbine, une chute de ladite température, dans une fenêtre temporelle déterminée.

Comme précédemment, la fenêtre temporelle est ajustée pour garantir que la chute de la température des gaz corresponde à la phase débutant au point d'inflexion A.

Dans le cas où aucune chute n'est détectée dans ladite fenêtre temporelle, on en déduit au cours d'une sous-étape 1211 que les injecteurs de démarrage ne sont pas colmatés.

Si le point d'inflexion A est détecté, le procédé comprend en outre, d'une part la détection 1220 du second point d'inflexion B, à partir duquel la température croît de nouveau, et la mesure de l'amplitude de la chute de température entre les points A et B, et d'autre part la mesure 1222 de la vitesse de rotation de la turbine au moment du point d'inflexion A amorçant ladite chute.

En outre les valeurs de l'amplitude de la chute de température entre A et B et de la vitesse de rotation à t_{A} sont enregistrées au cours d'une étape 1221.

Puis, la variation de l'amplitude de la chute de température entre A et B est comparée 1230 comme précédemment à au moins un seuil S_{Δ} prédéterminé.

Par ailleurs, la variation de la vitesse de rotation de la turbine au niveau du point A par rapport au(x) démarrage(s) précédent(s) est également comparée au cours d'une sous-étape 1231 à au moins un seuil de variation S_{Δ}' prédéterminé.

Comme pour la variation de l'amplitude de la chute de température entre A et B, la variation de la vitesse de rotation de la turbine peut être déterminée d'un démarrage à l'autre ou d'un jour à l'autre.

Précisément, on peut calculer la variation V_{tA}(j)-V_{tA}(j-1) de V_{tA} entre V_{tA} (j) au jour j de la mesure, et V_{tA} (j-1) à la veille de la mesure, pour obtenir une variation de la vitesse de rotation d'un jour à l'autre.

Alternativement, si la turbomachine est démarrée plusieurs fois par jour, on peut calculer la variation de la vitesse de rotation à t_{A}, en calculant V_{tA}(d)-V_{tA}(d-1) entre V_{tA} (d) au démarrage d au cours duquel la mesure est faite et V_{tA} (d-1) au démarrage précédent.

Avantageusement, la vitesse de rotation de la turbine est exprimée en pourcentage de la vitesse nominale de rotation de la turbine, ce qui permet de rendre les grandeurs mesurées et le seuil S_{Δ}' indépendants de la turbomachine dans laquelle le procédé est mis en oeuvre. Dans le premier cas, la variation de la vitesse de rotation est exprimée en % par jour, et dans le second cas, en % par rapport au dernier démarrage.

Si la variation obtenue est positive, cela signifie que la vitesse de rotation à t_{A} a augmenté par rapport à la mesure précédente, et on en déduit que les injecteurs de démarrage ne sont pas colmatés ou qu'il existe une erreur de mesure.

Si la variation est négative, on la compare au seuil S_{Δ}' négatif.

Le seuil S_{Δ}' dépend de la manière de calculer la variation (par jour ou par démarrage), et du degré de colmatage que l'on veut pouvoir détecter à partir de la comparaison. Par exemple le seuil S_{Δ}' peut être choisi de -0.1 %/jour.

En fonction des résultats de ces comparaisons on déduit le degré de colmatage des injecteurs de démarrage au cours d'une étape 1240.

On peut envisager plusieurs possibilités d'attribution du niveau de colmatage des injecteurs de démarrage, en fonction du nombre de seuils pour chaque indicateur, des valeurs des seuils et du niveau de sécurité recherché.

A titre d'exemple non limitatif, on peut attribuer un degré «faible» de colmatage si la variation de l'amplitude de la chute de température entre les points A et B est inférieure au seuil S_{Δ} prédéterminé, et si la variation de la vitesse de rotation de la turbine au point A est supérieure au seuil S_{Δ}'.

Si la variation de l'amplitude de la chute est supérieure au seuil S_{Δ}, et que la variation de la vitesse de rotation de la turbine à t_{A} est inférieure au seuil S_{Δ}', on en déduit un degré de colmatage « fort » des injecteurs.

Enfin, si la variation de l'amplitude de la chute de température entre A et B est supérieure - respectivement inférieure - au seuil S_{Δ}, et que la variation de la vitesse de rotation de la turbine est supérieure - respectivement inférieure au seuil S_{Δ}' (c'est-à-dire que les indications fournies par les deux indicateurs sont contradictoires sur le degré de colmatage des injecteurs), on peut par exemple en déduire un degré « intermédiaire » de colmatage, ou relancer le procédé 1000 d'estimation.

Comme précédemment, on traduit avantageusement le degré de colmatage des injecteurs de démarrage en une durée ou en un nombre de démarrage restants avant d'atteindre un niveau de colmatage tel qu'il est impossible de démarrer la turbomachine.

En reprenant les mêmes valeurs que précédemment pour les degrés « faible » et « fort » de colmatage, un degré « intermédiaire » pourrait correspondre à une semaine d'utilisation restante ou à environ 12 démarrages.

Comme précédemment, le procédé peut comprendre une étape 1300 d'alerte, dont la nature peut varier en fonction du degré de colmatage détecté.

## Revendications

1. Procédé de surveillance d'un degré de colmatage des injecteurs de démarrage d'une turbomachine comprenant :
- une chambre de combustion (4), dans laquelle débouche au moins un injecteur de démarrage (10) alimenté en carburant, lesdits injecteurs de démarrage étant adaptés pour initier la combustion dans ladite chambre par allumage du carburant, et
- une turbine (5), actionnée en rotation par les gaz résultant de la combustion du carburant dans la chambre,
le procédé étant **caractérisé en ce qu'**il comprend les étapes consistant à :
- mesurer (1100), au cours d'une phase de démarrage de la turbomachine, la température des gaz d'échappement en sortie de la turbine et,
- déterminer (1200), à partir de l'évolution temporelle de la température ainsi mesurée, un degré de colmatage des injecteurs de démarrage.

2. Procédé de surveillance selon la revendication 1, dans lequel l'étape de détermination (1200) du degré de colmatage des injecteurs de démarrage en fonction de l'évolution temporelle de la température des gaz d'échappement en sortie de turbine comprend :
- la détection d'une phase de chute de la température au cours d'une phase d'augmentation de ladite température,
l'absence de détection de ladite chute correspondant à une absence de colmatage des injecteurs de démarrage, et
- la mesure de l'amplitude de ladite chute.

3. Procédé de surveillance selon la revendication 2, dans lequel la variation de l'amplitude de la chute de la température des gaz en sortie de turbine au cours de démarrages successifs est comparée (1220) à au moins un seuil prédéterminé, et le degré de colmatage des injecteurs de démarrage est déduit (1240) du résultat de ladite comparaison.

4. Procédé de surveillance selon l'une des revendications 2 ou 3, comprenant en outre, au cours de l'étape de mesure (1100) de la température des gaz d'échappement en sortie de la turbine, la mesure de la vitesse de rotation de la turbine, et dans lequel la déduction (1240) du degré de colmatage des injecteurs de démarrage est réalisée à partir de l'évolution temporelle de la température des gaz et des mesures de vitesse de rotation de la turbine.

5. Procédé selon la revendication 4 en combinaison avec la revendication 3, dans lequel l'étape de détermination (1200) du degré de colmatage des injecteurs de démarrage comprend :
- la mesure de la valeur de la vitesse de rotation de la turbine au moment du point d'inflexion de la température des gaz en sortie de turbine amorçant la chute de ladite température,
- la comparaison de la variation de ladite valeur au cours de démarrages successifs à un seuil prédéterminé, et
- la déduction, à partir des comparaisons des variations de l'amplitude de la chute de température et de la valeur de vitesse de la turbine avec leurs seuils respectifs, du degré de colmatage des injecteurs de démarrage.

6. Procédé selon l'une des revendications précédentes, comprenant en outre la déduction, à partir du degré de colmatage des injecteurs de démarrage, d'un nombre de démarrages de la turbomachine restant avant que le degré de colmatage des injecteurs de démarrage n'atteigne un niveau résultant en une impossibilité de démarrer ladite turbomachine.

7. Procédé selon la revendication 6, comprenant l'activation d'une alerte (1300) pour qu'une maintenance ou un remplacement des injecteurs de démarrage soit réalisé avant que le degré de colmatage des injecteurs de démarrage n'atteigne un niveau résultant en une impossibilité de démarrer ladite turbomachine.

8. Système de surveillance (200) d'un état de fonctionnement des injecteurs de démarrage d'une turbomachine comprenant :
- une chambre de combustion (4), dans laquelle débouche au moins un injecteur de démarrage (10) alimenté en carburant, lesdits injecteurs de démarrage étant adaptés pour initier la combustion dans ladite chambre par allumage du carburant, et
- une turbine (5), actionnée en rotation par les gaz résultant de la combustion du carburant dans la chambre,
le système de surveillance (200) étant adapté pour la mise en oeuvre du procédé selon l'une des revendications précédentes et comprenant :
- au moins un capteur de température des gaz (210) en sortie de la turbine (5), et
- une unité de traitement (220), comportant une mémoire (223) et des moyens de traitement (222) adaptés pour traiter les mesures de température pour déterminer un degré de colmatage des injecteurs de démarrage.

9. Système de surveillance (200) selon la revendication précédente, comprenant en outre au moins un capteur (212) de vitesse de rotation de la turbine, et dans lequel les moyens de traitement (222) de l'unité de traitement (220) sont en outre adaptés pour traiter les mesures de vitesse de rotation de la turbine, pour déterminer le degré de colmatage des injecteurs de démarrage.

10. Système de surveillance (200) selon l'une des revendications 8 ou 9, dans lequel les capteurs (210, 220) sont adaptés pour effectuer des mesures à une fréquence supérieure ou égale à 1 Hz.

11. Turbomachine (1) comprenant :
- une chambre de combustion (4), dans laquelle débouche au moins un injecteur de démarrage (10) alimenté en carburant, lesdits injecteurs de démarrage étant adaptés pour initier la combustion dans ladite chambre par allumage du carburant, et
- une turbine (5), actionnée en rotation par les gaz résultant de la combustion du carburant dans la chambre,
la turbomachine étant **caractérisée en ce qu'**elle comprend en outre un système de surveillance (200) selon l'une des revendications 8 à 10.

12. Aéronef, comprenant au moins une turbomachine (1) comportant :
- une chambre de combustion (4), dans laquelle débouche au moins un injecteur de démarrage (10) alimenté en carburant, lesdits injecteurs de démarrage étant adaptés pour initier la combustion dans ladite chambre par allumage du carburant, et
- une turbine (5), actionnée en rotation par les gaz résultant de la combustion du carburant dans la chambre,
l'aéronef étant **caractérisé en ce qu'**il comprend en outre un système de surveillance (200) selon l'une des revendications 8 à 10.

## Patentansprüche

1. Verfahren zur Überwachung eines Verstopfungsgrades der Starteinspritzventile einer Turbomaschine, die folgendes umfasst:
- eine Brennkammer (4), wobei zumindest ein mit Kraftstoff versorgtes Starteinspritzventil (10) mündet, wobei die Starteinspritzventile so angepasst sind, dass sie die Verbrennung in der Brennkammer durch Zünden des Kraftstoffs auslösen, und
- eine Turbine (5), die durch die aus der Verbrennung des Kraftstoffs in der Kammer entstehenden Gase in Drehung versetzt wird,
wobei das Verfahren **dadurch gekennzeichnet ist, dass** es die aus folgendem bestehenden Schritte umfasst:
- in einer Startphase der Turbomaschine das Messen (1100) der Temperatur der Auspuffgase am Austritt aus der Turbine, und
- ausgehend von der zeitlichen Entwicklung der so gemessenen Temperatur das Bestimmen (1200) eines Verstopfungsgrades der Starteinspritzventile.

2. Verfahren zur Überwachung nach Anspruch 1, wobei der Schritt des Bestimmens (1200) des Verstopfungsgrades der Starteinspritzventile je nach der zeitlichen Entwicklung der Temperatur der Auspuffgase am Austritt aus der Turbine folgendes umfasst:
- das Erkennen einer Phase des Temperaturabfalls im Laufe einer Phase des Anstiegs der Temperatur,
das Fehlen der Entdeckung des Abfalls, das einer fehlenden Verstopfung der Starteinspritzventile entspricht, und
- das Messen der Amplitude des Abfalls.

3. Verfahren zur Überwachung nach Anspruch 2, wobei die Variation der Amplitude des Temperaturabfalls der Gase am Austritt aus der Turbine bei aufeinanderfolgenden Startvorgängen mit zumindest einem vorbestimmten Schwellenwert verglichen (1220) wird, und der Verstopfungsgrad der Starteinspritzventile vom Ergebnis des Vergleichs abgeleitet (1240) wird.

4. Verfahren zur Überwachung nach einem der Ansprüche 2 oder 3, das ferner im Verlauf des Schritts der Messung (1100) der Temperatur der Auspuffgase am Austritt aus der Turbine, die Messung der Drehgeschwindigkeit der Turbine umfasst, und wobei die Ableitung (1240) des Verstopfungsgrades der Starteinspritzventile ausgehend von der zeitlichen Entwicklung der Gase und der Drehzahlmessung der Turbine realisiert wird.

5. Verfahren nach Anspruch 4 in Verbindung mit Anspruch 3, wobei der Schritt des Bestimmens (1200) des Verstopfungsgrades der Starteinspritzventile folgendes umfasst:
- das Messen des Drehzahlwertes der Turbine im Moment des Wendepunkts der Gastemperatur am Austritt aus der Turbine, was den Abfall der Temperatur einleitet,
- den Vergleich der Variation des Werts bei aufeinanderfolgenden Startvorgängen mit einem vorbestimmten Schwellenwert, und
- die Ableitung aus den Vergleichen der Amplitudenvariationen des Temperaturabfalls und des Drehzahlwerts der Turbine mit ihren jeweiligen Schwellenwerten des Verstopfungsgrades der Starteinspritzventile.

6. Verfahren nach einem der vorhergehenden Ansprüche, das außerdem das Ableiten einer Anzahl Starts der Turbomaschine aus dem Verstopfungsgrad der Starteinspritzventile umfasst, die verbleibt, bevor der Verstopfungsgrad der Starteinspritzventile ein Niveau erreicht, das zur Unmöglichkeit des Starts der Turbomaschine führt.

7. Verfahren nach Anspruch 6, das die Aktivierung einer Warnmeldung (1300) umfasst, damit eine Instandhaltung oder ein Austausch der Starteinspritzventile vorgenommen wird, bevor der Verstopfungsgrad der Starteinspritzventile ein Niveau erreicht, das zur Unmöglichkeit des Starts der Turbomaschine führt.

8. Überwachungssystem (200) eines Betriebszustands der Starteinspritzventile einer Turbomaschine, das folgendes umfasst:
- eine Brennkammer (4), wobei zumindest ein mit Kraftstoff versorgtes Starteinspritzventil (10) mündet, wobei die Starteinspritzventile so angepasst sind, dass sie die Verbrennung in der Brennkammer durch Zünden des Kraftstoffs auslösen, und
- eine Turbine (5), die durch die aus der Verbrennung des Kraftstoffs in der Kammer entstehenden Gase in Drehung versetzt wird,
wobei das Überwachungssystem (200) für den Einsatz des Verfahrens nach einem der vorhergehenden Ansprüche geeignet ist und folgendes umfasst:
- zumindest einen Gastemperaturfühler (210) am Ausgang der Turbine (5), und
- eine Verarbeitungseinheit (220) mit einem Speicher (223) und geeigneten Verarbeitungsmitteln (222) für die Verarbeitung der Temperaturmessungen zur Bestimmung eines Verstopfungsgrades der Starteinspritzventile.

9. Überwachungssystem (200) nach dem vorhergehenden Anspruch, das ferner zumindest einen Drehzahlsensor (212) der Turbine umfasst, und wobei die Verarbeitungsmittel (222) der Verarbeitungseinheit (220) ferner geeignet sind, die Drehzahlmessungen der Turbine zu verarbeiten, um den Verstopfungsgrad der Starteinspritzventile zu bestimmen.

10. Überwachungssystem (200) nach einem der Ansprüche 8 oder 9, wobei die Sensoren (210, 220) geeignet sind, die Messungen bei einer Frequenz über oder gleich 1 Hz durchzuführen.

11. Turbomaschine (1), die folgendes umfasst:
- eine Brennkammer (4), wobei zumindest ein mit Kraftstoff versorgtes Starteinspritzventil (10) mündet, wobei die Starteinspritzventile so angepasst sind, dass sie die Verbrennung in der Brennkammer durch Zünden des Kraftstoffs auslösen, und
- eine Turbine (5), die durch die aus der Verbrennung des Kraftstoffs in der Kammer entstehenden Gase in Drehung versetzt wird,
wobei die Turbomaschine **dadurch gekennzeichnet ist, dass** sie ferner ein Überwachungssystem (200) nach einem der Ansprüche 8 bis 10 umfasst.

12. Luftfahrzeug, das zumindest eine Turbomaschine (1) umfasst, die folgendes enthält:
- eine Brennkammer (4), wobei zumindest ein mit Kraftstoff versorgtes Starteinspritzventil (10) mündet, wobei die Starteinspritzventile so angepasst sind, dass sie die Verbrennung in der Brennkammer durch Zünden des Kraftstoffs auslösen, und
- eine Turbine (5), die durch die aus der Verbrennung des Kraftstoffs in der Kammer entstehenden Gase in Drehung versetzt wird,
wobei das Luftfahrzeug **dadurch gekennzeichnet ist, dass** es ferner ein Überwachungssystem (200) nach einem der Ansprüche 8 bis 10 umfasst.

## Claims

1. A method for monitoring a degree of clogging of the starting injectors of a turbine engine comprising:
- a combustion chamber (4), into which at least one starting injector (10) supplied with fuel opens, said starting injectors being suitable for initiating the combustion in said chamber by igniting the fuel, and
- a turbine (5), rotated by the gases resulting from the combustion of the fuel in the chamber,
the method being **characterized in that** it comprises the steps of:
- measuring (1100), during a phase of starting the turbine engine, the temperature of the exhaust gases at the outlet of the turbine, and
- determining (1200), from the changes over time in the temperature thus measured, a degree of clogging of the starting injectors.

2. The method for monitoring according to claim 1, wherein the step of determination (1200) of the degree of clogging of the starting injectors as a function of the changes over time in the temperature of the exhaust gases at the outlet of the turbine comprises:
- the detection of a phase of fall of the temperature during a phase of rise of said temperature,
the absence of detection of said fall corresponding to the absence of clogging of the starting injectors, and
- the measurement of the amplitude of said fall.

3. The method for monitoring according to claim 2, wherein the variation in the amplitude of the fall in the temperature of the gases at the outlet of the turbine during successive startings is compared (1220) with at least one predetermined threshold, and the degree of clogging of the starting injectors is deduced (1240) from the result of said comparison.

4. The method for monitoring according to one of claims 2 or 3, further comprising, during the step of measurement (1100) of the temperature of the exhaust gases at the outlet of the turbine, the measurement of the speed of rotation of the turbine, and wherein the deduction (1240) of the degree of clogging of the starting injectors is carried out from the changes over time in the temperature of the gases and measurements of the speed of rotation of the turbine.

5. The method according to claim 4 in combination with claim 3, wherein the step of determination (1200) of the degree of clogging of the starting injectors comprises:
- the measurement of the value of the speed of rotation of the turbine at the moment of the inflection point of the temperature of the gases at the outlet of the turbine initiating the fall in said temperature,
- the comparison of the variation in said value during successive startings with a predetermined threshold, and
- the deduction, from comparisons of the variations of the amplitude of the fall in temperature and the value of speed of the turbine with their respective thresholds, of the degree of clogging of the starting injectors.

6. The method according to one of the preceding claims, further comprising the deduction, from the degree of clogging of the starting injectors, of a remaining number of startings of the turbine engine before the degree of clogging of the starting injectors reaches a level resulting in an impossibility of starting said turbine engine.

7. The method according to claim 6, comprising the activation of an alert (1300) so that a maintenance or a replacement of the starting injectors is carried out before the degree of clogging of the starting injectors reaches a level resulting in an impossibility of starting said turbine engine.

8. A system for monitoring (200) an operating state of starting injectors of a turbine engine comprising:
- a combustion chamber (4), into which at least one starting injector (10) supplied with fuel opens, said starting injectors being suitable for initiating the combustion in said chamber by igniting the fuel, and
- a turbine (5), rotated by the gases resulting from the combustion of the fuel in the chamber,
the system for monitoring (200) being suitable for the implementation of the method according to one of the preceding claims and comprising:
- at least one temperature sensor of the gases (210) at the outlet of the turbine (5), and
- a processing unit (220), comprising a memory (223) and processing means (222) suitable for processing the temperature measurements for the determination of a degree of clogging of the starting injectors.

9. The system for monitoring (200) according to the preceding claim, further comprising at least one sensor (212) of speed of rotation of the turbine, and wherein the processing means (222) of the processing unit (220) are moreover suitable for processing the measurements of speed of rotation of the turbine, for the determination of the degree of clogging of the starting injectors.

10. The system for monitoring (200) according to one of claims 8 or 9, wherein the sensors (210, 220) are suitable for carrying out measurements at a frequency greater than or equal to 1 Hz.

11. A turbine engine (1) comprising:
- a combustion chamber (4), into which at least one starting injector (10) supplied with fuel opens, said starting injectors being suitable for initiating the combustion in said chamber by igniting the fuel, and
- a turbine (5), rotated by the gases resulting from the combustion of the fuel in the chamber,
the turbine engine being **characterized in that** it further comprise a system for monitoring (200) according to one of claims 8 to 10.

12. An aircraft, comprising at least one turbine engine (1) including:
- a combustion chamber (4), into which at least one starting injector (10) supplied with fuel opens, said starting injectors being suitable for initiating the combustion in said chamber by igniting the fuel, and
- a turbine (5), rotated by the gases resulting from the combustion of the fuel in the chamber,
the aircraft being **characterized in that** it further comprises a system for monitoring (200) according to one of claims 8 to 10.
